# EUROPEAN PATENT APPLICATION

(11) **EP 1 841 122 A1**
(43) Date of publication of application: **03.10.2007**
(21) Application number: 06112143.0
(22) Date of filing: 31.03.2006
(51) Int. Cl.: H04L 9/18, G06F 7/58

(54) **Encryption method for highest security applications**

(71) Applicant: Schumacher, Alain, L-7340 Heisdorf (LU)
(72) Inventor: Schumacher, Alain, L-7340 Heisdorf (LU)
(74) Representative: Beissel, Jean

(57) **Abstract**

A method for encrypting a message M of *I_{M}*-bit length, comprises the steps of a) providing a first random bit sequence of *I_{R}*-bit length, *I_{R} ≥ I_{M} ;* b) subdividing said message M into unitary message strings of /ₛ-bits, wherein /ₛ *≤ I_{M} ;* c) for each unitary message string, executing an XOR-operation of said unitary message string with *Is* bits of said first random bit sequence for generating an encrypted unitary string; and d) assembling said encrypted unitary strings into a cipher text. According to the invention the assembly of the cipher text is such, that the positions of said encrypted unitary strings in said cipher text are randomly permuted with respect to the positions of the corresponding unitary message strings in said message. In other words, the step of assembling said encrypted unitary strings into a cipher text comprises the step of randomly permuting the positions of said encrypted unitary strings in said cipher text with respect to the positions of the corresponding unitary message strings in said message.

## Description

### Introduction

The present invention relates to an encryption method for highest security applications and more specifically to an improved One-Time-Pad encryption method.

The invention of the one-time pad is considered as a combined work of Gilbert Vernam of AT&T and Captain Joseph Mauborgne. In the one-time pad the plaintext to be encrypted is combined with a random key or *"pad"* that is as long as the plaintext. Each character in the message is combined with one from the (random, secret, and used only once) pad. So the pad must be at least the length of the message.

Theoretically there is no way to decipher the message using brute force attacks without knowing the contents of the pad. For this reason it is very important that the pad be protected (i.e. secret), random (i.e. unpredictable by anyone), and used only once, lest the cipher be easily compromised. The pad is easily determined when both the plaintext and the corresponding ciphertext is known.

There exist some objections against the use of the OTP in modern cryptography. The first one concerns the difficulties for distributing safely the enormous volumes of random data needed and the secure storing of this random data, while the second group of objections concerns the possibility of altering the message during the transmission over unsecured transmission channels (i.e. the public Internet).

The first objections may be overcome by the use of a suitable random number generator, which is adapted to generate high quality random numbers. To solve the second problem, the use of one of the modern message-authentication algorithms seems to be the logic solution. Such a combination would in principle guarantee unbreakable security. However in certain fields of application, especially in applications where a lot of communication messages (like e-banking) use very often the same standard and known small text pieces in all messages, it might be interesting to further enhance the protection conferred by the encryption method.

### Object of the invention

The object of the present invention is to provide an improved One-Time-Pad encryption method.

### General description of the invention

This object is achieved by an encryption method as claimed in claim 1. Further variants of the method are presented in the depending claims.

The proposed method for encrypting a message M of *I_{M}*-bit length, comprises the steps of a) providing a first random bit sequence of *I_{R}*-bit length, *I_{R} ≥ I_{M} ;* b) subdividing said message M into unitary message strings of *I_{S}*-bits, wherein *I_{S}* ≤ *I_{M};* c) for each unitary message string, executing an XOR-operation of said unitary message string with *I_{S}* bits of said first random bit sequence for generating an encrypted unitary string; and d) assembling said encrypted unitary strings into a cipher text. According to the invention the assembly of the cipher text is such, that the positions of said encrypted unitary strings in said cipher text are randomly permuted with respect to the positions of the corresponding unitary message strings in said message, the permutation of the positions being based on the first random bit sequence. In other words, the step of assembling said encrypted unitary strings into a cipher text comprises the step of randomly permuting - based on the first random bit sequence - the positions of said encrypted unitary strings in said cipher text with respect to the positions of the corresponding unitary message strings in said message.

In the encrypted message, the unitary strings e.g. the bytes of the original plaintext have changed their position in a random way. This means that even in applications, which require repeated encryption and transmission of the same short standard messages, a possible attacker will be confronted with a bit string of 8192 random bits.

In a preferred embodiment of the method, the message M comprises a number lp bits of plaintext and a hash value of *I_{H}*-bit length, said hash value being determined by the bits of said plaintext, wherein *I_{P}* + *I_{H}* ≤ *I_{M} .* The hash value, which may be generated by any suitable hashing algorithm such as e.g. the MD5 algorithm, enables to authenticate the message at the receiver's side and thus allows to determine, whether the message has been altered during the transmission.

It will be noted, that the message-authentication information is added to the plaintext prior to the encryption and prior to the random permutation of the byte positions. Thus in the resulting encrypted message, even the positions of the message-authentication code (16 byte =128 bit) are unknown, so no attack on this information is possible.

After the first encryption step and the subsequent assembling of the encrypted unitary strings into a cipher text, the resulting cipher text is preferably again encrypted with a different random bit sequence. Hence the method preferably comprises the further steps of providing a second random bit sequence of a length corresponding to the length of the cipher text; and executing an XOR-operation of said cipher text with said second random bit sequence for generating said encrypted message.

It will be noted, that the random bit sequences, which constitute the one-time pad, may be generated by any suitable random number generator, which is adapted to generate high quality random numbers. In a preferred embodiment of the method, the step of providing a first and/or second random bit sequence comprises the steps of
a) providing a random bit table (BFT) with *m_{BFT}* addressable bits BTⱼ, wherein 0 ≤ *j* ≤ *m_{BFT}* -1, said random bit table containing an equal number of "0" bits and "1" bits in a random distribution, and
b) for each bit of said first and/or second random bit sequence: i) generating an address FA in the range between 0 and *m_{BFT}-1,* ii) selecting the bit BT_{FA} having the address FA from said random bit table, and iii) setting said bit of said first and/or second random bit sequence to equal said bit BT_{FA} from said random bit table.

This method for generating the random bit sequence reproduces the outcome of the principle of coin flipping by randomly selecting one bit from a random bit table, which contains an equal number of "0" bits and "1" bits in a random distribution. The random bit sequence to be generated is then assembled bit by bit from the subsequent results of this "coin flipping simulation".

The address FA of the bit to be selected from the random bit table BFT may be randomly generated by any suitable method, which ensures a high quality randomness of the address within the given range. In order to get well distributed Random Numbers, the final addresses FA produced have to be as well randomly distributed over the whole address space of the Bit-Fishing-Table BFT. Appropriate measures to achieve this goal may comprise the assembly of the FA address form selected bits of a number of basic randomness values in accordance with specific complex final address assembly parameters. The basic randomness values themselves may be randomly generated using feed back modifiers, the latter being influenced by a predetermined number of previously generated bits.

Such a method thus generates very high quality random numbers while still being easily implemented on any standard computer, such as e.g. a simple personal computer.

### Detailed description of a preferred embodiment of the invention

It will be noted that the method in accordance with the present invention may be easily implemented on any standard personal computer or even on small physical supports such as smart cards or USB tokens with e.g. a 32-bit processor. This will be more apparent from the following description of one specific implementation.

In order to allow not only the secure transmission of files, but also to serve in an full-duplex live communication like e-banking, the proposed method breaks the plaintext message to be encrypted in plaintext blocks having a length 1000 bytes. Every plaintext block is then transformed in an 1024 bytes long cipher-text block. This cipher-text block contains information about the block-number (of the file or the session), the length of the text stored in the datagram and a message-authentication information. In a possible implementation, the message-authentication information may e.g. be generated by a MD5 type algorithm.

The term "randomly permuted positions" indicates the fact that during the encryption every byte of the original text has changed his position in the cipher text in a random way, i.e. the byte 5 of the first plaintext block may be in the first cipher-text block on position 844, whereas byte 5 of the second plaintext block may be in the second cipher-text block on position 45, and so on.

The motivation to do the encryption this way is based on the fact that a lot of communication messages (like e-banking) use very often the same standard and known small text pieces in all messages. The resulting cipher-text in which each byte has randomly changed its position and in which every bit is twice XOR-ed with different random bits, leaves any possible attacker with a bit string of 8192 perfect random bits.

Even the positions of the message-authentication code (16 byte =128 bit) are unknown, so no attack on this information is possible.

The encryption comprises the following steps:
a) generating a first sequence of 8192 random bits, the base, in an memory area organized in bytes
b) preparing an empty list of 1024 flags and a cipher-text memory space of 1024 bytes to store the cipher-text
c) preparing a plaintext memory space of 1024 bytes, which may be subdivided in a header portion of 8 bytes (64 bit), a text portion of 1000 bytes and a hash portion of 16 bytes
d) storing the block number (54 bit) of the plaintext block and the length of the datagram (10 bit) in the header portion of the plaintext memory space
e) storing up to 1000 bytes plain-text in the text portion of the plaintext memory space (if the plain-text is smaller than 1000, the remaining bytes are zero)
f) calculating the message digest as authentication and storing the resulting 16 bytes to the hash portion of the plaintext memory space, so that we have now the 1024 bytes original text to encrypt
g) initializing a cipher-position-counter and a original-text-counter by storing zero to the cipher-position-counter and the original-text-counter
h) extracting from the base the lowest 5 bit (0 to 31) from the byte indicated by the cipher-position-counter and adding these 5 bits to the cipher-position-counter, taking care that all additions to this counter have to be followed by a subtraction of 1024 if the result is 1024 or above
i) checking if the flag corresponding to the cipher-position-counter is empty, and if not, increasing the cipher-position-counter by one until we find an empty position (if the counter reaches 1024, one has to subtract 1024 in order to restart at position 0)
j) executing an XOR operation of the byte from the original text referenced by the original-text-counter with the byte of the base referenced by the cipher-position-counter and storing the result of XOR-operation the same byte-position in the cipher-block
k) flagging the same position in the flag-list as occupied
I) increasing by one the original-text-counter and the cipher-position-counter, taking care again that all additions to this counter have to be followed by a subtraction of 1024 if the result is 1024 or above
m) repeating steps h) to I) 1023 times
n) generating a second sequence of 8192 random bits
o) executing an XOR operation of the cipher-block with this 8192 bit-string, giving us the cipher-text to send

The decryption on the receiver side reverses the encryption by executing the following steps:
a) executing an XOR operation of the cipher-text with the second sequence of 8192 random bits
b) using the first sequence of 8192 random bits, the base, to find back the positions of the original text, and executing an XOR operation of the cipher with the corresponding byte from the base to give us the original text
c) After completing the 1024 bytes of the original text, checking the block-number and the length of the datagram, in order to detect a possible error
d) saving the last 16 bytes, the message authentication, and replacing these bytes with zeros
e) recalculating the message-digest and comparing the result with the saved 16 bytes, allowing us to detect any alteration by any means, i.e. by transmission error or by an attacker

It will be appreciated that, although the above described method seems to be a lengthy process, one should not forget that computers are in charge to encrypt and decrypt the messages. A Pentium IV with EMT 64 running at 3 GHz is able to process around 6000 blocks/sec, generation of the random numbers as described above included, giving a throughput of 6 Megabytes/sec.

Of course this method is not the solution for 10 Gigabit/sec links, but the combination of a symmetric encryption like AES combined with the proposed method for the key-exchange will guaranty the same high-security as the use of the so-called quantum cryptography, offering as benefits the low costs and the possibility to link easily long distances, like Europe with Australia.

It will be noted, that small physical supports containing a MPU with protected memory may be easily programmed in pairs with a secret random bit table for the random number generation. Due to the storage in the protected memory, copying during the physical transportation to the distant partner is impossible, avoiding so the possible source of information leak in the case that the random numbers for a one-time pad have to be exchanged by the support of a CD or tape. If the above described random number generator is integrated in such an MPU, the generation of new keys may be executed as well.

The security of the presently proposed method becomes more evident if we think of small messages for authentication and login for example. As these messages can now always be hidden in 8192 random bits, it becomes impossible for an attacker to cryptanalyse the messages transmitted.

If one uses the above described random number generator, the random bit table named Bit-Fishing-Table (BFT) is the determining element for the randomness of the generated numbers. This means that if one uses this random number generator in crypto applications, the BFT, and not the seed, is the only element to be held secret. Thus one may openly indicate (in the subject of an email or in the synchronization of a full-duplex channel) the seed to use for decrypting. In full duplex the responder may use the first seed plus one in order to avoid the usage of the same random numbers twice.

To extent the usage over point-to-point communications, there exist two possibilities. Where appropriate we may create a trusted and secured post-office which shares with every participant a different random bit table BFT. Now every member of the group has the possibility to send and receive secret messages from any other of the group, as the post-office decrypts internally the received message (with authentication) and sends it after a new encryption with the appropriate BFT to the addressee. This seems the best solution for local authorities, bigger corporations and so on.

A different solution exists for smaller closed groups to share a common random bit table BFT, but that every encryption unit has only the authorization to use a restricted number-space of the 2⁶⁴ possible seeds. A first encrypted block of a message encrypted according to the present method should then include the one or more addressees to whom one wants to send the message. The decryption program of the units of other members may then refuse to decrypt the message if his own member-number is not included in the addressee-list of the first block.

Other applications may concern the distribution of secret papers inside an organization, by including a decrypting unit between the computer and the printer, forcing the addressee to use his own smartcard with password-protection to print the document that never shows up in plaintext inside the company IT-network.

In the same way one might organize a trusted company-wide computer-network where all sensible computers were shielded by an encryption system in accordance with the present invention, allowing nevertheless all internal communication over the Internet. This may apply to lawyer offices, patent attorneys, bankers etc.

## Claims

1. A method for encrypting a message M of *I_{M}*-bit length, comprising the steps of
providing a first random bit sequence of *I_{R}*-bit length, *I_{R} ≥I_{M};*
subdividing said message M into unitary message strings of *I_{S}*-bits, wherein *I_{S}*≤*I_{M}*;
for each unitary message string, executing an XOR-operation of said unitary message string with *I_{S}* bits of said first random bit sequence for generating an encrypted unitary string; and
assembling said encrypted unitary strings into a cipher text;
**characterised in that** the positions of said encrypted unitary strings in said cipher text are permuted with respect to the positions of the corresponding unitary message strings in said message, wherein the permutation of the positions is based on the first random bit sequence.

2. A method according to claim 1, wherein said step of assembling said encrypted unitary strings into a cipher text comprises the step of randomly permuting - based on the first random bit sequence - the positions of said encrypted unitary strings in said cipher text with respect to the positions of the corresponding unitary message strings in said message.

3. A method according to any one of claims 1 or 2, wherein said Message M comprises a number *I_{P}* bits of plaintext and a hash value of *I_{H}*-bit length, said hash value being determined by the bits of said plaintext, wherein *I_{P}*+*I_{H}*≤*I_{M}.*

4. A method according to any one of claims 1 to 3, further comprising the steps of
providing a second random bit sequence of a length corresponding to the length of the cipher text; and
executing an XOR-operation of said cipher text with said second random bit sequence for generating said encrypted message.

5. A method according to any one of claims 1 to 4, wherein the step of providing a first and/or second random bit sequence comprises the steps of
a) providing a random bit table (BFT) with *m_{BFT}* addressable bits BTⱼ, wherein 0 *≤j≤m_{BFT}-*1*,* said random bit table containing an equal number of "0" bits and "1" bits in a random distribution, and
b) for each bit of said first and/or second random bit sequence
i. generating an address FA in the range between 0 and *m_{BFT}-1,*
ii. selecting the bit BT_{FA} having the address FA from said random bit table, and
iii. setting said bit bit of said first and/or second random bit sequence to equal said bit BT_{FA} from said random bit table.
